# EUROPÄISCHE PATENTSCHRIFT

(11) **EP 3 280 266 B1**
(45) Veröffentlichungstag und Bekanntmachung des Hinweises auf die Patenterteilung: **25.12.2019**
(21) Anmeldenummer: 16719247.5
(22) Anmeldetag: 11.04.2016
(51) Int. Cl.: A23B 4/015, H05B 3/00, H05B 6/62, A23L 5/10, A23L 13/60

(54) **VORRICHTUNG UND VERFAHREN ZUM ERWÄRMEN VON UMHÜLLTEN LEBENSMITTELN**
DEVICE AND METHOD FOR HEATING WRAPPED FOODSTUFFS
DISPOSITIF ET PROCÉDÉ POUR RÉCHAUFFER DES PRODUITS ALIMENTAIRES ENTOURÉS D'UNE ENVELOPPE

(30) Priorität: 09.04.2015 DE 102015206385; 24.03.2016 DE 102016105624
(43) Veröffentlichungstag der Anmeldung: 14.02.2018
(73) Patentinhaber: Deutsches Institut für Lebensmitteltechnik e.V., 49610 Quakenbrück (DE)
(72) Erfinder: GROSSE KOHORST, Werner, 49413 Dinklage (DE); ROHE, Thomas, 49632 Essen i.O. (DE)
(74) Vertreter: Taruttis, Stefan Georg
(86) Internationale Anmeldenummer: PCT/EP2016/057932
(87) Internationale Veröffentlichungsnummer: WO 2016/162567

(56) Entgegenhaltungen:
- WO-A2-2015/022189
- DE-A1- 2 746 680
- DE-A1-102011 080 860
- JP-A- 2014 150 786
- Gabriel Piette ET AL: "IS THERE A FUTURE FOR OH- MIC COOKING IN MEAT PROC- ESSING ?", , 31. Mai 2001 (2001-05-31), XP055167115, Gefunden im Internet: URL:http://cmsa-ascv.ca/documents/2001May- 01Piettepgs8-10.pdf [gefunden am 2015-02-04]

## Beschreibung

Die vorliegende Erfindung betrifft eine Vorrichtung und ein mit der Vorrichtung durchführbares Verfahren zum Erwärmen von umhüllten Lebensmitteln, insbesondere von Fleisch- und Wurstwaren, die von einer Hülle umhüllt sind. Die Vorrichtung ermöglicht ein schnelles Erwärmen des umhüllten Lebensmittels durch gleichmäßiges Aufbringen elektrischen Stroms, der innerhalb des Lebensmittels Wärme erzeugt. Bevorzugt ist das umhüllte Lebensmittel eine Fleisch- oder Wurstware, die von einer zylindrischen Hülle umhüllt ist.

### Stand der Technik

Die WO 2015/022189 A2 beschreibt das Erwärmen eines Lebensmittelrohstoffs in einer formstabilisierten Hülle, die aus nicht leitenden Material besteht, wobei die Öffnungen der Hülle mit leitenden Flächen verschlossen werden und über diese leitenden Flächen Strom durch das Füllmaterial geschickt wird, während sich die leitenden Flächen relativ zum Füllmaterial bewegen.

Die DE 10 2011 080 860 A1 beschreibt Elektroden, die um einen Querschnitt angeordnet sind, durch den ein Rohstoff gefördert werden kann.

Die DE 2746680 A1 beschreibt die Erwärmung einer Lebensmittelmasse dadurch, dass diese Masse durch ein Rohr gepumpt wird, in dem entlang der Längsachse beabstandete ringförmige Elektroden angeordnet sind, die mit Wechselstrom beaufschlagt werden.

Die JP 2014-150786 A zeigen in ihren Figuren die Förderung einer Masse über parallele Rollen, die quer zur Förderrichtung liegen, wobei die Rollen jeweils abwechselnd mit Wechselstrom entgegengesetzter Polarität beaufschlagt werden.

Piette et al, CMSA News May 2001 beschreiben die Erwärmung von Fleischmassen durch Anlegen von elektrischen Strom an einen Schlauch.

Die DE 10 2010 028 780 A1 beschreibt das Erwärmen von Fleisch- und Wurstwaren in einer elektrisch leitfähigen Hülle in einer Kammer mit Wechsel- oder Impulsspannung.

Die DE 3214861 beschreibt eine Form mit gegeneinander verschieblichen Elektroden, zwischen die eine von einer perforierten Verpackungsfolie umhüllte Lebensmittelmasse angeordnet wird, wobei die Folie zum Stromdurchlass mit Salzwasser getränkt ist.

Die WO 02/45516 A2 beschreibt das Erwärmen von Lebensmitteln zwischen zwei parallelen Förderbändern, hinter denen jeweils eine Elektrode angeordnet ist, wobei die Stromeinleitung in das Lebensmittel kontaktlos bei Radiofrequenz erfolgen soll.

### Aufgabe der Erfindung

Der Erfindung stellt sich die Aufgabe eine alternative Vorrichtung und ein alternatives Verfahren zur Erwärmung von Lebensmitteln bereitzustellen, die von einer Hülle eingefasst sind.

### Beschreibung der Erfindung

Die Erfindung löst die Aufgabe mit den Merkmalen der Ansprüche 1 bzw. 12 und stellt eine Vorrichtung zur Erwärmung von Lebensmitteln bereit, insbesondere zu deren Garung, wobei das Lebensmittel in einer Hülle eingefasst ist. Die Vorrichtung weist zumindest zwei beabstandete, achsparallele und gleichsinnig drehbare zylindrische Elektroden auf, die mit den Anschlüssen entgegengesetzter Polarität einer elektrischen Stromquelle kontaktiert sind und in elektrischem Kontakt mit der Hülle stehen, wobei die Elektroden an der Hülle rotieren. Die Hülle weist eine Längsachse auf, die parallel zu den Längsachsen der Elektroden angeordnet ist, so dass die zumindest zwei Elektroden achsparallel zur Hülle rotieren, die Hülle mit einer den Elektroden entgegengesetzten Drehrichtung. Die Elektroden sind bevorzugt drehangetrieben. Die zylindrischen Elektroden weisen eine elektrisch leitende Umfangsoberfläche auf und entsprechend ist die Stromquelle eingerichtet, Wechselstrom zu erzeugen, der bevorzugt gepulst ist und insbesondere eine Frequenz von zumindest 2 kHz, bevorzugt zumindest 3 kHz oder zumindest 4 kHz aufweist, z.B. 8 bis 50 kHz oder bis 30 kHz oder bis 20 kHz oder bis 10 kHz.
Alternativ, insbesondere wenn die Hülle elektrisch nicht leitfähig ist, z.B. die Hülle bei Wechselstrom einer Frequenz von 2 bis 50 kHz oder bis 20 kHz im Wesentlichen elektrisch nicht leitfähig ist, ist die Stromquelle eingerichtet, Strom bei Radiofrequenz zu erzeugen, beispielsweise einer Radiofrequenz von 3-300 MHz, insbesondere 40,68 bis 27,120 MHz, z.B. 13,56 MHz. Denn Strom von Radiofrequenz kann eine oberflächliche Isolatorschicht in Form der Hülle auf dem Lebensmittel passieren und in ein auf den Elektroden angeordnetes Lebensmittel eindringen.

Die Hülle weist bevorzugt, insbesondere wenn die Stromquelle zur Erzeugung von Wechselstrom von zumindest 2 kHz eingerichtet ist, eine Leitfähigkeit im Bereich von 0,1 mS/cm bis 100 mS/cm auf, insbesondere im Bereich von 1 bis 50 mS/cm, z.B. 2 bis 10 mS/cm.

Die Drehachsen der Elektroden sind z.B. horizontal ausgerichtet.

Die Elektroden sind in einem Abstand zueinander angeordnet, dass ein direkter Spannungsübertritt zwischen den Elektroden nicht möglich ist und das zu erwärmende Lebensmittel in der Hülle gleichzeitig von den Elektroden kontaktiert wird. Dazu kann das Lebensmittel in der Hülle mit seiner Längsachse parallel zu den Achsen der Elektroden und angrenzend an diese angeordnet sein.

Die Elektroden können unterhalb des Lebensmittels in der Hülle angeordnet sein. Alternativ kann das Lebensmittel auf einer Elektrode und zumindest einer Andruckrolle aus Isolator drehbar angeordnet sein und die andere zylindrische Elektrode kann das Lebensmittel in der Hülle an einem Umfangsabschnitt kontaktieren, der oberhalb der anderen Elektrode und/oder oberhalb der Andruckrolle liegt, weiter alternativ kann das Lebensmittel drehbar auf zwei achsparallelen Andruckrollen drehbar gelagert sein und die Anordnung mit zumindest zwei achsparallelen zylindrischen Elektroden kann oberhalb der Andruckrollen und achsparallel zu diesen angeordnet sein, wobei die Andruckrollen und die Elektroden einen Raum begrenzen, in dem das Lebensmittel in der Hülle anzuordnen ist. Eine Andruckrolle, die unterhalb der Hülle angeordnet ist, wirkt auch als Tragrolle. Zumindest zwei Elektroden begrenzen einen Raum, in dem das Lebensmittel in der Hülle anzuordnen ist, wobei der Raum optional zusätzlich von Andruckrollen begrenzt werden kann, von denen optional eine oder zwei oberhalb oder unterhalb des umhüllten Lebensmittels angeordnet sind. Das umhüllte Lebensmittel ist daher in einem Bereich angeordnet, der von zumindest zwei Elektroden aufgespannt wird, wobei das Lebensmittel auf einer Elektrode und einer Andruckrolle oder auf zwei Andruckrollen aufliegen kann und von diesen getragen wird. Generell kann eine Andruckrolle eine Oberfläche aus Isolator aufweisen oder aus Isolator bestehen oder eine leitfähige Oberfläche aufweisen, z.B. aus Edelstahl bestehen und elektrisch isoliert gelagert sein, insbesondere von den Elektroden elektrisch isoliert gelagert.

Optional wird der Raum, in dem das Lebensmittel in der Hülle anzuordnen ist, von vier Elektroden aufgespannt, von denen jeweils benachbarte mit den Kontakten der Stromquelle verbunden sind, z.B. mit Kontakten entgegengesetzter oder gleicher Polarität.
Die zylindrischen Elektroden sind bevorzugt gleich lang und weisen bevorzugt die Länge entlang ihrer Drehachse auf, wie sie das Lebensmittel in der Hülle aufweist.

Erfindungsgemäß ist zumindest eine Elektrode, optional beide Elektroden, in gegeneinander isolierte axiale Abschnitte unterteilt, wobei jeder Elektrodenabschnitt mittels einer Leitung mit der elektrischen Stromquelle kontaktiert ist und einzeln mit der Stromquelle verbindbar ist. Dabei können einzelne isolierte Abschnitte zumindest einer Elektrode mit Strom beaufschlagt werden, um gesteuert in einzelnen Abschnitten elektrischen Strom in das an die Elektroden angrenzende Lebensmittel einzubringen. Es ist weiter bevorzugt, dass ein Temperaturfühler in einem Abstand zu dem Bereich angrenzend an eine Elektrode angeordnet ist, in dem das von der Hülle umfasste Lebensmittel angeordnet ist, um die oberflächliche Temperatur der Hülle des Lebensmittels zu bestimmen. Bevorzugt ist der Temperaturfühler eingerichtet, die Temperaturen in Abschnitten entlang der Längsachse der Elektroden bzw. des Lebensmittels in der Hülle zu bestimmen und die Stromquelle ist eingerichtet, den Abschnitt einer oder beider Elektroden mit einer höheren Stromleistung zu beaufschlagen, der an den axialen Abschnitt angrenzt, für den für die Hülle eine Temperatur unterhalb eines vorgegebenen Grenzwerts, oder die niedrigste Temperatur bestimmt wird.

Es hat sich gezeigt, dass das Verfahren zur Erwärmung eines Lebensmittels, das von einer Hülle umhüllt ist, in Kontakt mit zumindest zwei beabstandeten, achsparallelen zylindrischen Elektroden unter Rotation der Elektroden zu einer gleichmäßigen Erwärmung des Lebensmittels in der Hülle führt, wenn die Elektroden mit Strom beaufschlagt werden. Dabei wird angenommen, dass die Erwärmung des Lebensmittels von dem axialen Bereich der Hülle ausgeht, der die zwei Elektroden entgegengesetzter Polarität miteinander verbindet. Dabei führt die Rotation der Elektroden und entsprechend die Rotation des Lebensmittels mit der Hülle entlang der Elektroden zu einer Verteilung der erwärmten Abschnitte des Lebensmittels, sodass sich insgesamt auch bei starkem lokalem Stromfluss zwischen zwei Elektroden eine gleichmäßige Erwärmung des Lebensmittels in der Hülle ergibt.

Die Elektroden weisen eine elektrisch leitende Oberfläche auf, beispielsweise eine Oberfläche aus Edelstahl. Die Stromquelle ist insbesondere zur Erzeugung von Wechselstrom, bevorzugt pulsförmig, eingerichtet, wobei vorzugsweise die Hülle, die das Lebensmittel umhüllt, elektrisch leitfähig ist. Eine elektrisch leitfähige Hülle kann z.B. wasserhaltig sein, vorzugsweise mit Salzgehalt, z.B. eine Hülle auf Basis von Cellulose, z.B. Papierdarm oder Faserdarm aus Baumwolle, oder einem in Wasser quellfähigen Polymer, oder auf Basis eines Polymers, z.B. Polyamid, das elektrisch leitfähige Partikel enthält, z.B. aus Aluminium, Graphit oder Ruß. Für eine wasserhaltige Hülle ist bevorzugt, die Hülle während der Beaufschlagung mit Strom von außen zu befeuchten, z.B. durch Auftropfen oder Aufsprühen von Wasser, das optional Salz enthalten kann. Das Befeuchten kann kontinuierlich oder intermittierend erfolgen. Entsprechend weist die Vorrichtung optional eine Befeuchtungseinrichtung für die Hülle auf, z.B. eine Tropfeinrichtung oder Sprüheinrichtung für Wasser, das optional Salz enthalten kann. Die Befeuchtungseinrichtung ist z.B. auf den Bereich gerichtet, in dem die Hülle anzuordnen ist, insbesondere auf einen Bereich oberhalb zweier beabstandeter achsparalleler und gleichsinnig drehbarer zylindrischer Elektroden.

In den Ausführungsformen, in denen die Stromquelle eingerichtet ist, Elektroden mit Strom von Radiofrequenz zu beaufschlagen und die Elektroden eine oberflächliche Schicht aus Isolator aufweisen können, kann die das Lebensmittel umhüllende Hülle elektrisch schwach oder nicht leitend sein.

Bevorzugt weist die Vorrichtung an einem ersten axialen Ende der Elektroden, bevorzugt an beiden axialen Enden der Elektroden, jeweils eine Erwärmungseinrichtung auf, beispielsweise ein Heißluftgebläse, einen Infrarotstrahler, einen Dampfauslass, die jeweils gegen eine senkrecht zur Achse der Elektroden angeordnete Ebene gerichtet sind, um in dieser Ebene angeordnete Endabschnitte des Lebensmittels in der Hülle zu erwärmen. Alternativ oder zusätzlich kann die Erwärmungseinrichtung eine erwärmte Platte, vorzugsweise drehbar, aufweisen, die gegen eine Ebene senkrecht zur Achse der Elektroden zu belasten ist, insbesondere gegen die Hülle des Lebensmittels zu belasten ist, die den endständigen Bereich des Lebensmittels verschließt. Eine solche Platte ist vorzugsweise drehbar angeordnet und kann beispielsweise elektrisch oder mit Dampf beheizt sein. Eine solche Platte kann z.B. mittels eines Stellmotors, eines Hydraulik- oder Pneumatikzylinders, eines Gewichts oder einer Feder gegen die Ebene senkrecht zur Achse der Elektroden angeordnet sein, so dass sie gegen das Ende einer Hülle belastet werden kann. Eine solche drehbare Platte kann eine der Hülle zugewandte ringförmige Oberfläche aufweisen, deren Zentralausnehmung einen Verschluss der Hülle, z.B. einen Clip, aufnehmen kann. Eine Erwärmungseinrichtung in Form einer um die Längsachse der Hülle bzw. um eine Drehachse, die parallel zur Längsachse der Elektrode liegt, drehbaren Platte weist eine Oberfläche auf, die etwa senkrecht zur Längsachse der Elektrode bzw. der Hülle angeordnet ist, wobei die Oberfläche gegen einen endständigen Oberflächenabschnitt der Hülle belastet ist. Die Platte kann beheizt und/oder mit Strom beaufschlagt sein, so dass Strom von dieser Platte zu einer Elektrode entgegengesetzter Polarität fließen kann.

Eine drehbare Platte, die gegen eine zur Achse der Elektroden senkrechte Ebene und gegen ein an den Elektroden angeordnetes Lebensmittel in einer Hülle belastbar ist, hat auch den Vorteil, die endständigen Abschnitte des Lebensmittels in der Hülle zumindest anteilig in eine Ebene, die senkrecht zur Längsachse der Elektroden und entsprechend senkrecht zur Längsachse des Lebensmittels in der Hülle zu formen. Dies erlaubt die Formung des Lebensmittels in der Hülle über einen größeren zylindrischen Bereich, da durch die endständige Belastung der Hülle senkrecht zur Längsachse der Hülle der Anteil der endständigen Abschnitte, die nicht mehr zylindrisch sind, verkleinert wird.

In einer weiteren Ausführungsform weist die Vorrichtung zumindest drei achsparallele beabstandete zylindrische Elektroden und/oder Andruckrollen auf, von denen jeweils zwei benachbarte einen Bereich aufspannen, der jeweils ein Lebensmittel in der Hülle trägt. Dabei ist der Bereich unterhalb der Hülle angeordnet. Von den Elektroden sind jeweils benachbarte mit Anschlüssen entgegengesetzter Polarität einer elektrischen Stromquelle kontaktiert. Von diesen zumindest drei Elektroden und/oder Andruckrollen sind zumindest drei etwa in einer Ebene oder mit Versatz angeordnet, sodass jeweils zwei benachbarte Elektroden bzw. Andruckrollen an einen Bereich angrenzen, in dem ein Lebensmittel in der Hülle angeordnet werden kann, sodass im Verfahren jeweils zwei von einer Hülle umhüllte Lebensmittel eine gemeinsame Elektrode bzw. Andruckrolle kontaktieren und jeweils zumindest eine Elektrode, bevorzugt zumindest zwei Elektroden, die von der gemeinsamen Elektrode beabstandet ist. Bei dieser Ausführungsform kann optional die elektrische Energie, mit der die benachbarten Elektroden beaufschlagt werden, gleich sein oder entlang der Anordnung achsparalleler Elektroden zunehmen oder abnehmen. Bei zumindest drei Elektroden und/oder Andruckrollen, die bevorzugt etwa in einer Ebene angeordnet sind, wobei jeweils zwei benachbarte Elektroden und/oder Andruckrollen zwischen sich einen Bereich aufspannen, in dem eine Hülle angeordnet werden kann, wobei die Hülle bevorzugt auf jeweils zwei benachbarten Elektroden und/oder Andruckrollen aufliegt, können die Elektroden mit unterschiedlicher elektrischer Leistung beaufschlagt werden. Z.B. können Elektroden, die Hüllen kontaktieren, die in benachbarten Bereichen angeordnet sind, mit elektrischer Leistung beaufschlagt werden, die jeweils höher oder niedriger ist, so dass das Lebensmittel in den Hüllen in benachbarten Bereichen mit jeweils höherer oder niedrigerer Leistung erwärmt werden.

In der Ausführungsform mit zumindest drei zylindrischen Elektroden oder Andruckrollen, die zwischen sich zumindest zwei Bereiche aufspannen, die jeweils ein umhülltes Lebensmittel tragen, weist die Vorrichtung bevorzugt eine Hebeeinrichtung auf, mit der von einer Hülle umhülltes Lebensmittel von einer ersten Position angrenzend an zwei benachbarte Elektroden in eine beabstandete zweite Position bewegt werden kann, in der die Hülle von zumindest einer anderen Elektrode kontaktiert wird, sodass in der zweiten Position die Hülle von einer Elektrode wie in der ersten Position kontaktiert wird und von einer weiteren Elektrode. Eine Hebeeinrichtung kann z.B. einen angetriebenen Kipphebel aufweisen, der z.B. an einem Drehpunkt unterhalb oder neben den Elektroden und/oder Andruckrollen angelenkt ist, die Bereiche aufspannen, in denen das Lebensmittel in der Hülle aufliegt. Ein solcher Kipphebel kann z.B. von einem Stellmotor, einem Hydraulikzylinder oder Pneumatikzylinder angetrieben sein, um einen vom Drehpunkt beabstandeten Abschnitt des Kipphebels von einer ersten in eine zweite Stellung zu bewegen. Der vom Drehpunkt beabstandete Abschnitt des Kipphebels ist in einer ersten Stellung unterhalb des Bereichs zwischen den Elektroden und/oder Andruckrollen angeordnet, in den das umhüllte Lebensmittel ragt, und in einer davon beabstandeten zweiten Stellung in dem Bereich, in dem er gegen das umhüllte Lebensmittel belastet ist und das umhüllte Lebensmittel über eine der Elektroden oder Andruckrollen bewegt, auf denen das umhüllte Lebensmittel aufliegt.

Die Hebeeinrichtung ist bevorzugt eingerichtet, das umhüllte Lebensmittel in einer Richtung entlang der Vorrichtung zu bewegen, z.B. bei der Ausführung als Kipphebel dadurch, dass der Kipphebel in der zweiten Stellung jeweils auf derselben Seite versetzt zum Schwerpunkt des Lebensmittels in der Hülle angeordnet ist und die Hülle mit Versatz zum Schwerpunkt belastet.

Bevorzugt ist zwischen jeweils zwei Elektroden und/oder Andruckrollen, die einen Bereich aufspannen, in denen das Lebensmittel in der Hülle aufliegt, jeweils eine Hebeeinrichtung angeordnet, um das umhüllte Lebensmittel von einem Bereich zwischen zwei Elektroden und/oder Andruckrollen, der ein umhülltes Lebensmittel trägt, in den benachbarten Bereich zu bewegen und schließlich, an einer endständigen Elektrode oder Andruckrolle, das umhüllte Lebensmittel von der Vorrichtung weg zu bewegen, z.B. auf eine Lagerfläche oder eine Transporteinrichtung.

In der Ausführungsform mit zumindest drei zylindrischen Elektroden und/oder Andruckrollen können diese etwa in einer Ebene angeordnet sind, wobei die Ebene optional in einem Winkel zur Horizontalen angeordnet ist. Optional können diese Elektroden und/oder Andruckrollen, die Bereiche aufspannen, in denen das umhüllte Lebensmittel anliegt, mit einem Winkel ihrer Drehachsen gegen die Horizontale geneigt sein, z.B. in einem Winkel von bis zu 60°, insbesondere wenn am tiefer liegenden Ende der Elektroden und/oder Andruckrollen eine drehbare Platte, die insbesondere eine erwärmte Platte ist, angeordnet ist, deren Oberfläche etwa senkrecht zur Drehachse liegt.

Die Ausführungsform mit zumindest drei zylindrischen Elektroden, von denen jeweils zwei benachbarte Bereiche aufspannen, in denen das umhüllte Lebensmittel aufliegt, und bei denen bevorzugt das umhüllte Lebensmittel von einem Bereich in den benachbarten mittels einer Hebeeinrichtung bewegt wird, hat den Vorteil, dass sie erwärmte umhüllte Lebensmittel in kürzeren zeitlichen Abständen bereitstellt, als z.B. eine Ausführungsform, die nur 1 umhülltes Lebensmittel aufnehmen kann, z.B. mit nur 2 Elektroden. Entsprechend ist die Ausführungsform mit zumindest drei, vorzugsweise 5 bis zumindest 8 zylindrischen Elektroden, von denen jeweils zwei benachbarte Bereiche aufspannen, in denen das umhüllte Lebensmittel aufliegt, mit einer Hebeeinrichtung bevorzugt mit anschließender Anordnung einer Vorrichtung zur Weiterverarbeitung, insbesondere einer Schneideeinrichtung.

In Ausführungsformen mit zumindest drei zylindrischen Elektroden, von denen jeweils zwei benachbarte Bereiche aufspannen, in denen das umhüllte Lebensmittel aufliegt, ist bevorzugt, dass alle Elektroden mit derselben elektrischen Leistung beaufschlagt werden, und bevorzugt mit einem gemeinsamen Generator verbunden sind, der die elektrische Gesamtleistung erzeugt.

Weiter bevorzugt weist die Vorrichtung eine Fülleinrichtung für das Füllen von Hüllen mit dem Lebensmittel auf, sowie eine Vorrichtung zur Anordnung einer Hülle mit Lebensmittel angrenzend an ein erstes Paar Elektroden und eine Hebeeinrichtung zum Transportieren des Lebensmittels in der Hülle von den Elektroden im Anschluss an das Erwärmen, z.B. auf eine eine Lagerfläche oder eine Transporteinrichtung. Bevorzugt ist das Lebensmittel Wurstbrät, das beim Verfahren in der Hülle durch das Beaufschlagen mit elektrischem Strom gegart wird.

Optional weist die Vorrichtung eine Schneideinrichtung auf, auch Slicer genannt, mit dem das Lebensmittel noch im erwärmten Zustand, z.B. bei einer Temperatur oberhalb 50 °C, z.B. oberhalb 60 °C, oberhalb 65 °C z.B. bei einer Temperatur von bis zu 85°C, bis 80°C oder bis 75°C in Scheiben geschnitten wird. Denn es hat sich gezeigt, dass das Schneiden des erwärmten Lebensmittels bei erhöhter Temperatur möglich ist, wenn die Schreiben unmittelbar anschließend in einem Stapel oder mit Versatz geschindelt abgelegt werden und unmittelbar gekühlt werden, beispielsweise in einem Kühlraum. Dabei wurde gefunden, dass das Schneiden eines Lebensmittels bei erhöhter Temperatur, beispielsweise von Wurst, mit Ablage der Scheiben mit Versatz und anschließender Kühlung die geschnittenen Scheiben in einer Verpackung nicht zu einem übermäßigen Verkleben der Scheiben führt, beispielsweise nur zu einer Haftung der Scheiben aneinander, die im Wesentlichen der Haftung entspricht, wenn das Lebensmittel vor dem Schneiden gekühlt wird, beispielsweise auf eine Temperatur im Bereich von 30 bis 10 °C. Bevorzugt wird die Hülle vor dem Schneiden von dem Lebensmittel entfernt.

Bevorzugt weist die Vorrichtung eine Kühleinrichtung auf, mittels derer ein Kühlmedium entlang der Verpackungen strömen gelassen wird und die Träger aufweist, auf denen die Verpackungen mit Abstand zueinander angeordnet sind, so dass die Verpackungen mit den darin angeordneten, im erwärmten Zustand geschnittenen Scheiben mit Abstand voneinander angeordnet sind und von Kühlmedium umströmt werden. Die Kühleinrichtung soll die Scheiben in der Verpackung schnell kühlen, um ein Anhaften der Scheiben aneinander zu verringern bzw. zu vermeiden. Die Kühleinrichtung kann z.B. ein Kühltunnel sein, durch den die Verpackungen gefördert werden.

Das Kühlmedium kann Kühlgas sein, z.B. Luft, oder eine Kühlflüssigkeit, z.B. Wasser und/oder Alkohol oder eine wässrige und/oder alkoholische Salzlösung. Die Träger der Kühleinrichtung können Förderbänder sein, die optional gelocht sind, z.B. aus Kunststoff, aus Metall oder aus Metallgewebe oder Fäden, auf oder zwischen denen die Verpackungen angeordnet sein können.

Die Erfindung wird nun genauer anhand von Beispielen und mit Bezug auf die Figuren beschrieben, die schematisch in
- Figur 1 eine Aufsicht auf eine erfindungsgemäße Vorrichtung aus Sicht entlang der Achse der Elektroden,
- Figur 2 eine Aufsicht auf eine Vorrichtung senkrecht auf die Achsen der Elektroden,
- Figur 3 eine Ausführungsform der Vorrichtung mit vier Elektroden je Hülle,
- Figur 4 eine Ausführungsform mit segmentierten Elektroden,
- Figur 5 eine Ausführungsform mit zumindest drei in einer Ebene angeordneten Elektroden und in
- Figur 6 eine Ausführungsform mit Hebeeinrichtung zeigen.

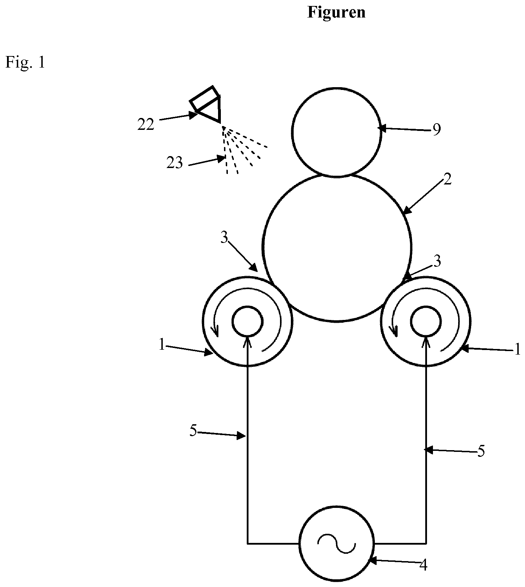

Die Figur 1 zeigt zwei achsparallele, gleichsinnig drehbare zylindrische Elektroden 1, die in einem Abstand zueinander angeordnet sind und an die Hülle 2, die ein Lebensmittel umfasst, angrenzen. Die Hülle 2 des Lebensmittels berührt zumindest zwei Elektroden 1 jeweils entlang einer Kontaktfläche 3 zur Übertragung der elektrischen Energie. Die Elektroden 1 sind mit den Anschlüssen entgegengesetzter Polarität einer elektrischen Stromquelle 4 verbunden, beispielsweise mittels jeweils einer Leitung 5. Die Kontaktierung der Elektrode 1 durch die Leitung 5 kann beispielsweise mittels eines Schleifringübertragers erfolgen. Zumindest eine der Elektroden 1 ist zur Drehung motorisch drehangetrieben, bevorzugt beide. Weiterhin zeigt Fig. 1 eine Andruckrolle 9, die aus Isoliermaterial besteht oder aus Metall und elektrisch gegen die Elektroden isoliert gelagert ist, und die eingerichtet ist, die Hülle 2 gegen die Elektroden 1 zu belasten. Für die Drehung der Elektroden 1 ist zumindest eine Elektrode 1 drehangetrieben, alternativ zumindest eine Andruckrolle 9. Es ist generell bevorzugt, dass alle Elektroden 1 drehangetrieben sind, jeweils auf dieselbe Umfangsgeschwindigkeit, um eine gleichmäßige Übertragung der elektrischen Energie auf die Hülle 2 zu erlauben und ein Anhaften der Hülle 2 an den Elektroden 1 zu vermeiden. Optional ist auch die Andruckrolle 9 auf dieselbe Umfangsgeschwindigkeit drehangetrieben. Die Elektroden 1 und/oder die Andruckrolle 9 spannen zwischen sich einen Bereich auf, in dem die Hülle 2 anzuordnen ist, so dass die Hülle 2 von zwei Elektroden 1, einer Elektrode 1 und einer Andruckrolle 9 getragen wird, alternativ von zwei beabstandeten Andruckrollen. Entsprechend sind zwei von Andruckrolle 9 und Elektroden 1 unterhalb der Hülle 1 angeordnet, bevorzugt zwei Elektroden 1 unterhalb der Hülle 2, wobei optional keine Andruckrolle 9 vorhanden ist, sondern die Hülle 2 mit dem Lebensmittel darin nur durch ihre Gewichtskraft gegen zwei Elektroden 1 belastet ist.

Die Figur 1 zeigt eine optionale Befeuchtungseinrichtung 22, die in Form einer Sprüheinrichtung ausgebildet ist, die auf die Hülle 2 gerichtet ist. Das von der Befeuchtungseinrichtung 22 auf die Hülle 2 aufgebrachte Wasser 23 enthält bevorzugt Salz, z.B. in der Konzentration, in der in der Hülle 2 angeordnetes Brät Salz enthält.

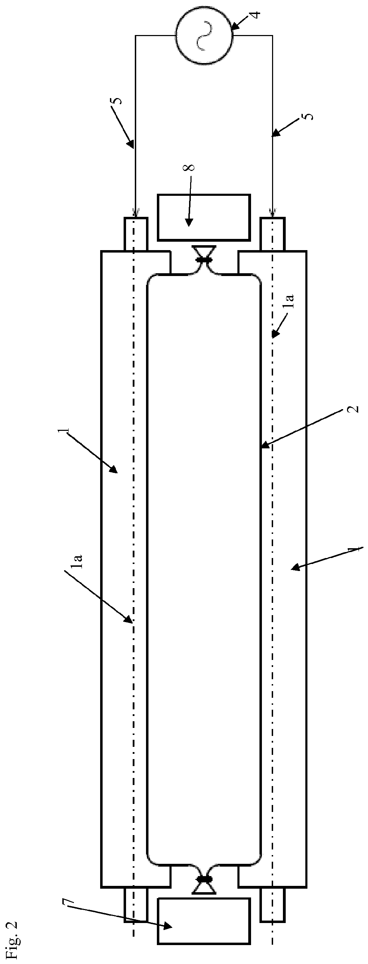

Die Figur 2 zeigt eine Vorrichtung mit zylindrischen, achsparallelen Elektroden 1, die drehangetrieben sind, wobei die Hülle 2 eines Lebensmittels angedeutet ist, die an den Bereich zwischen zwei benachbarten Elektroden 1 angrenzt und von diesen getragen wird. Die Vorrichtung weist eine drehbar gelagerte Heizplatte 7 auf, die auf eine Ebene ausgerichtet ist, die senkrecht zur Achse 1a der Elektroden 1 steht. Daher kann die Heizplatte 7 gegen einen endständigen Abschnitt der Hülle 2 belastet werden, der die Stirnfläche der Hülle 2 bildet. Als Alternative zu der Heizplatte 7 kann die Heizeinrichtung für die stirnseitigen Flächen der Hülle 2 z.B. ein Infrarotstrahler oder ein Heißluftgebläse 8 sein, das auf die Ebene gerichtet ist, die senkrecht zur Achse la der Elektroden 1 und in einem Abstand zu den Elektroden 1 ausgerichtet ist, um die stirnseitige Fläche der Hülle 2 zu erwärmen.

Wie in Figur 2 gezeigt ist, sind jeweils benachbarte Elektroden 1 mit Anschlüssen entgegengesetzter Polarität der elektrischen Stromquelle 4 verbunden.

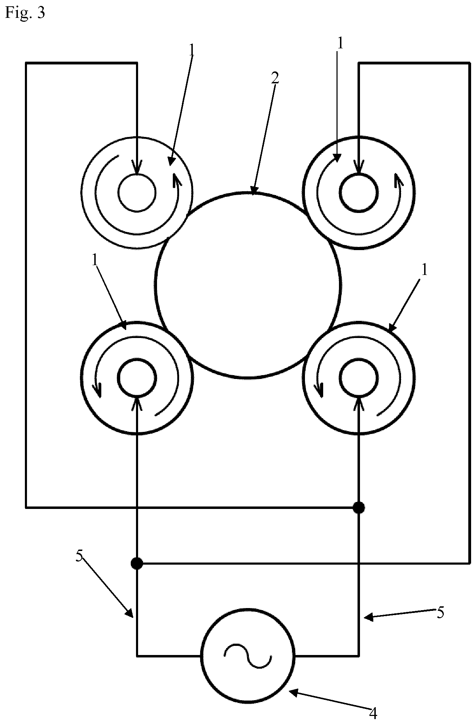

Die Figur 3 zeigt eine Vorrichtung, bei der jeweils vier Elektroden 1 einen Bereich umfassen, in dem die Hülle 2 anzuordnen ist. In dieser Ausführungsform sind jeweils benachbarte Elektroden 1 mit Anschlüssen entgegengesetzter Polarität der Stromquelle 4 verbunden, so dass jeweils zwei benachbarte Elektroden 1 Abschnitte des Umfangs der Hülle 2 mit Strom beaufschlagen können.

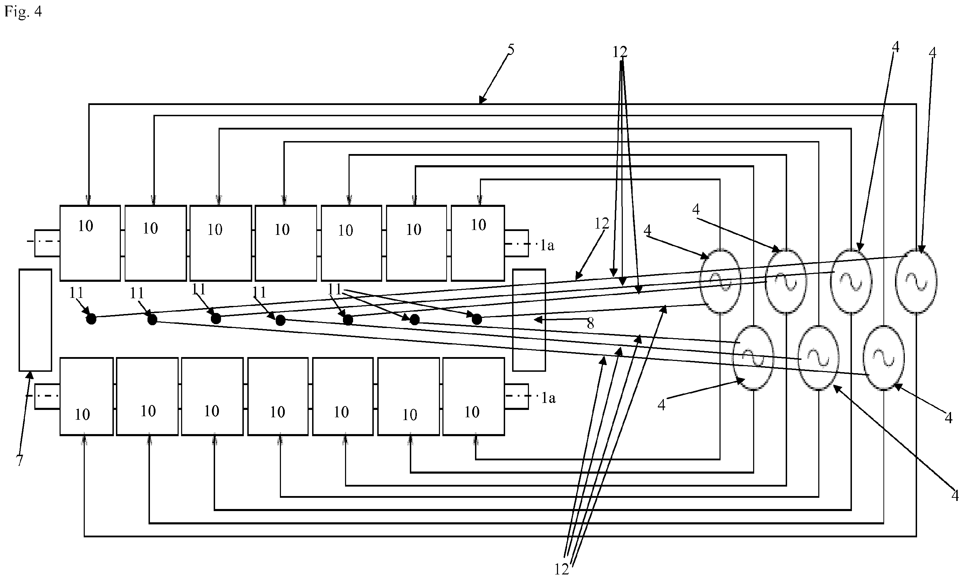

Am Beispiel der Elektroden 1 ist in Figur 4 die optionale Unterteilung der Elektroden 1 in aneinander angrenzende, gegeneinander elektrisch isolierte Elektrodenabschnitte 10 gezeigt, die jeweils separat mit der elektrischen Stromquelle 4 kontaktiert sind und einzeln mit der Stromquelle 4 verbindbar sind, sodass die Elektrodenabschnitte 10 einzeln gesteuert mit Strom beaufschlagbar sind. Bevorzugt sind zwei benachbarte Elektroden 1 in aneinander angrenzende, gegeneinander elektrisch isolierte Elektrodenabschnitte 10 unterteilt, die jeweils separat mit der Stromquelle 4 verbunden sind, wobei die Stromquelle 4 eingerichtet ist, jeweils zwei Elektrodenabschnitte 10 benachbarter paralleler Elektroden 1, 1a, 1b mit Strom zu beaufschlagen, die sich über denselben axialen Abschnitt erstrecken. Bevorzugt ist dieser axiale Abschnitt derjenige, für den ein Temperaturfühler 11 eine Temperatur der Hülle 2 bestimmt, die unterhalb einer vorgegebenen Temperatur liegt, oder die niedrigste Temperatur, die für einen axialen Abschnitt der Hülle 2 bestimmt ist.

Weiter zeigt die Figur 4 eine Anordnung von Temperaturfühlern 11, die jeweils auf einen Bereich parallel zu einem Elektrodenabschnitt 10 gerichtet sind, wobei weiter bevorzugt die Stromquelle eingerichtet und gesteuert ist, abhängig von einem Signal eines Temperaturfühlers 11 die Elektrodenabschnitte 10 mit Strom zu beaufschlagen, beispielsweise diejenigen parallelen axialen Elektrodenabschnitte 10 zweier benachbarter Elektroden 1, für die an der Hülle 2 eine Temperatur unterhalb einer vorgewählten Temperatur oder die relativ niedrigste Temperatur gemessen ist. Der Temperaturfühler 11 kann beispielsweise ein IR-Temperatursensor sein. Die Anordnung von Temperaturfühlern 11 kann z.B. oberhalb des Bereichs angebracht sein, in dem die Hülle 2 (nicht gezeigt) anzuordnen ist.

Für diese Ausführungsform ist schematisch durch die Steuerleitungen 12 gezeigt, dass jeweils ein Temperaturfühler 11 in Bezug auf die Leitungen 5 mit einer gesteuerten Stromquelle 4 verbunden sein kann, wobei die Leitungen 5 mit jeweils Elektrodenabschnitten 10 verbunden sind, die in benachbarten Elektroden 1 jeweils einen Elektrodenabschnitt 10 kontaktieren, der denselben axialen Abschnitt nur einer Elektrode 1 oder zweier benachbarter Elektroden 1 einnimmt. Erfindungsgemäß kann jeder axiale Abschnitt 10 der Elektroden 1 abhängig von einem Signal eines Temperaturfühlers 11, der auf die Hülle 1 in dem axialen Abschnitt 10 gerichtet ist, gesteuert mit Strom der Stromquelle 4 beaufschlagt werden.

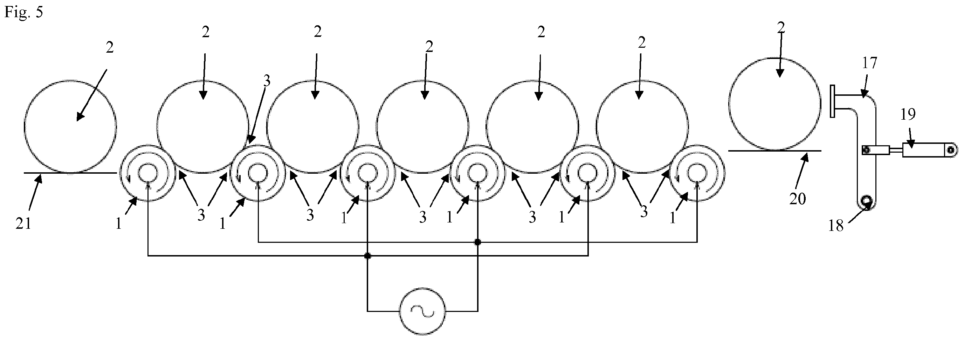

Die Figur 5 zeigt eine Vorrichtung mit 6 achsparallelen zylindrischen Elektroden 1, die etwa in einer Ebene angeordnet sind, wobei jeweils zwei benachbarte Elektroden 1 einen Bereich aufspannen, in dem eine Hülle 2 angeordnet ist. Jeweils zwei benachbarte Elektroden 1 spannen einen Bereich auf, in dem eine Hülle 2 angeordnet ist und von den Elektroden 1 getragen wird. Die benachbarten Elektroden 1 sind jeweils mit den Anschlüssen der Stromquelle 4 entgegengesetzter Polarität verbunden. Alternativ zu den Elektroden 1 kann zumindest eine Andruckrolle als Tragrolle vorgesehen sein und die Elektrode 1 oberhalb der Hülle 2 angeordnet sein. Für das Anordnen des Lebensmittels in der Hülle 2 in den Bereich, der von zwei Elektroden 1 aufgespannt wird und in eine Position angrenzend an zwei Elektroden 1 zeigt Figur 5 einen Schwenkhebel 17, der um ein Schwenklager 18 verschwenkt und mittels eines Antriebs 19 gegen eine Hülle 2 bewegt werden kann, um diese auf einer Unterlage 20 über eine Elektrode 1 zu bewegen.

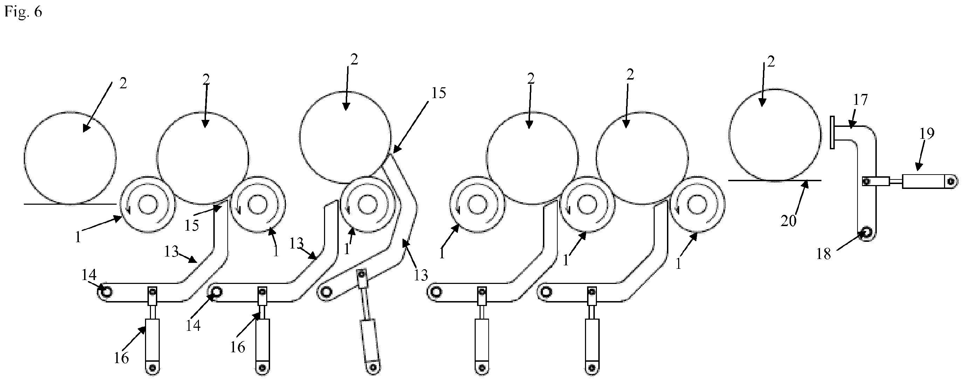

Figur 6 zeigt eine Vorrichtung entsprechend Figur 5, die zusätzlich in den Bereichen, die von zwei benachbarten Elektroden 1 aufgespannt werden, Hebeeinrichtungen aufweist, mittels derer das Lebensmittel mit der Hülle 2 über eine Elektrode 1 in den benachbarten Bereich bewegt werden kann. Die beispielhafte Fördereinrichtung weist Hebel 13 auf, die an einem Drehpunkt 14 angelenkt sind. Ein vom Drehpunkt 14 entferntes Ende 15 jedes Hebels kann mittels eines Antriebs 16 in dem Bereich, der durch benachbarte Elektroden 1 aufgespannt wird, gegen die Hülle 2 belastet werden. Da das Ende 15 entgegen der Richtung (in Figur 6 nach links) der Bewegung der Hülle 2 von der Mitte des Bereichs versetzt ist, der zwischen zwei benachbarten Elektroden aufgespannt ist, erlaubt das Schwenken des Hebels 13 eine Bewegung der Hülle 2 jeweils in derselben Richtung über die Elektroden 1. Zur besseren Übersicht sind die elektrischen Leitungen 5 in Figur 6 nicht dargestellt. Angrenzend an die Anordnung von Elektroden ist an deren einem Ende eine Unterlage 21 angeordnet, auf die das in der Hülle 2 erwärmte Lebensmittel bewegt werden kann.

### Beispiel: Erwärmung von Wurstbrät in einer Hülle

Wurstbrät für Mortadella aus Schweinefleisch wurde nach dem Kuttern in eine Hülle aus elektrisch leitendem Material mit 60 bis 200 mm Durchmesser mit einer Länge von 160 cm gefüllt und an den Enden mit Clips verschlossen. Diese zylindrische Hülle, die mit dem Wurstbrät gefüllt war, wurde zunächst auf zwei parallele, horizontal ausgerichtete zylindrische Elektroden 1 aufgelegt, die mit einer ersten elektrischen Energie beaufschlagt waren und anschließend mittels eines Schwenkhebels über die eine Elektrode gehoben und auf dieser einen Elektrode und einer weiteren benachbarten Elektrode angeordnet, um dieses benachbarte Elektrodenpaar mit einer höheren elektrischen Energie zu beaufschlagen, wie auch mit Bezug auf Figur 5 und Figur 6 beschrieben ist. Die Elektroden 1a hatten einen Außendurchmesser von 150 mm und einen Abstand von 30 mm, waren drehbar gelagert und mittels einer umlaufenden Kette oder eines Treibriemens gleichsinnig von einem Motor angetrieben. Die Umfangsgeschwindigkeit betrug etwa 10 bis 100 cm/s.

Die Elektroden 1 wiesen auf einem Metallzylinder mit einer elektrisch leitenden Oberfläche auf. Der Metallzylinder jeder Elektrode 1 war über einen Schleifringkontakt mit den Anschlüssen entgegengesetzter Polarität einer Spannungsquelle 4 verbunden. Die Paare benachbarter Elektroden 1, auf denen eine mit Lebensmittel gefüllte Hülle angeordnet war, wurden mit Strom von jeweils 8 A, 500 V bei einer Frequenz von 20 kHz beaufschlagt. Dabei wurde jedes Paare benachbarter Elektroden 1, auf denen eine Hülle angeordnet war, mit Strom von 8A aus einer gemeinsamen Stromquelle beaufschlagt. Dies ergibt in der Figur 6 insgesamt 5 x 8 A = 40 A Strom. Entsprechend kann diese Vorrichtung jeweils nach 1/5 der Zeit eine erwärmte mit Lebensmittel gefüllte Hülle bereitstellen, die für insgesamt für das Erwärmen einer Hülle erforderlich ist.

Die Erwärmung des Wurstbräts in der Hülle 2 erfolgte von anfänglichen 5 °C auf zumindest 68 °C, jeweils bestimmt als Oberflächentemperatur der Hülle 2. Die mit einem Einstichthermometer gemessene Kerntemperatur des Wurstbräts erreichte 68 °C.

Unmittelbar im Anschluss an die Erwärmung zur Garung wurde die Hülle 2 von der Wurst entfernt und die Wurst, die eine Temperatur von 60 bis 65 °C aufwies, wurde mit einem üblichen Slicer in Scheiben geschnitten, die mit Versatz von ca. 30 bis 50 % ihres Durchmessers in tiefgezogene Schalen aus Kunststofffolie gelegt und mit einer Deckelfolie verschlossen wurden. Diese Verpackungen wurden in einer Kühlkammer, die ein Kaltluftgebläse aufwies, gekühlt. Es zeigte sich, dass die Wurstscheiben nach dem Abkühlen auf ca. 5 bis 8 °C eine Haftung aneinander aufwiesen, die ein problemloses Entnehmen der Scheiben durch Abheben bzw. Abziehen erlaubte.

**Bezugszeichenliste:**

| | |
|---|---|
| 1 Elektrode | 11 Temperaturfühler |
| 1a Drehachse der Elektrode | 12 Steuerleitung |
| 2 Hülle | 13 Hebel |
| 3 Kontaktfläche | 14 Drehpunkt |
| 4 elektrische Stromquelle | 15 Ende |
| 5 Leitung | 16 Antrieb |
| 6 Isolierschicht | 17 Schwenkhebel |
| 7 Heizplatte | 18 Schwenklager |
| 8 Heizstrahler, Heißluft-oder | 19 Antrieb |
| Dampfgebläse | 20 Unterlage |
| 9 Andruckrolle | 21 Unterlage |
| 10 axialer Elektrodenabschnitt | 22 Befeuchtungseinrichtung |
| | 23 Wasser |

## Patentansprüche

1. Verfahren zur Herstellung von Lebensmitteln, die in einer zylindrischen Hülle (2) enthalten sind, mit dem Schritt des Erwärmens durch Beaufschlagen mit elektrischen Strom, wobei die Hülle (2) von zumindest zwei Elektroden (1) kontaktiert wird, die mit Strom entgegengesetzter Polarität beaufschlagt sind, wobei die Elektroden (1) zylindrisch sind, achsparallel angeordnet und gleichsinnig um ihre Achsen drehbar gelagert sind, **dadurch gekennzeichnet, dass** zumindest eine Elektrode (1) in gegeneinander isolierte axiale Abschnitte (14) unterteilt ist, wobei jeder Elektrodenabschnitt mittels einer Leitung mit der elektrischen Stromquelle kontaktiert ist und einzeln mit der Stromquelle verbindbar ist und dass die Hülle (2) mit ihrer Längsachse parallel zu den Längsachsen der Elektroden (1) angeordnet ist, so dass die zumindest zwei Elektroden (1) achsparallel zur Hülle (2) rotieren, die Hülle (2) mit einer den Elektroden (1) entgegengesetzten Drehrichtung.

2. Verfahren nach Anspruch 1, **dadurch gekennzeichnet, dass** eine Stromquelle (4) die Elektroden (1, 1a) mit Wechselstrom mit einer Frequenz im Bereich von 2 kHz bis 300 MHz beaufschlagt.

3. Verfahren nach Anspruch 1, **dadurch gekennzeichnet, dass** die Elektroden (1) eine elektrisch leitfähige zylindrische Oberfläche aufweisen, die Hülle (2) elektrisch leitfähig ist und eine Stromquelle (4) die Elektroden (1, 1a) mit Wechselstrom einer Frequenz von zumindest 2 kHz, bevorzugt 3 bis 50 kHz beaufschlagt.

4. Verfahren nach einem der voranstehenden Ansprüche, **dadurch gekennzeichnet, dass** die Hülle (2) nacheinander in zumindest zwei Bereichen angeordnet wird, von denen jeder von zwei Elektroden (1), einer Elektrode (1) und einer Andruckrolle (9) oder zwei Andruckrollen (9) aufgespannt wird und von denen die Hülle (2) getragen wird.

5. Verfahren nach Anspruch 4, **dadurch gekennzeichnet, dass** das Lebensmittel in der Hülle (2) in zumindest zweien der Bereiche mit einer anderen elektrischen Leistung beaufschlagt wird.

6. Verfahren nach einem der Ansprüche 4 bis 5, **dadurch gekennzeichnet, dass** das Lebensmittel in der Hülle (2) mittels einer Hebeeinrichtung von einem Bereich in einen benachbarten Bereich bewegt wird.

7. Verfahren nach einem der voranstehenden Ansprüche, **dadurch gekennzeichnet, dass** die Oberflächentemperatur der Hülle (1) mittels einer Anordnung von Temperaturfühlern (11) gemessen wird, von denen jeder auf einen axialen Abschnitt der Hülle (2) gerichtet ist und zumindest eine Elektrode (1) in gegeneinander isolierte axiale Elektrodenabschnitte (10) unterteilt ist, von denen jeder einzeln abhängig von einem Signal der Anordnung von Temperaturfühlern (11) für die Oberflächentemperatur gesteuert mit der Stromquelle (4) verbunden und mit Strom beaufschlagt wird.

8. Verfahren nach einem der voranstehenden Ansprüche, **dadurch gekennzeichnet, dass** eine Erwärmungseinrichtung (7, 8) gegen zumindest einen endständigen Oberflächenabschnitt der Hülle (2) gerichtet ist.

9. Verfahren nach Anspruch 8, **dadurch gekennzeichnet, dass** die Erwärmungseinrichtung (7, 8) eine um die Längsachse der Hülle (2) drehbare Platte mit einer Oberfläche ist, die etwa senkrecht zur Längsachse (la) der Elektrode (1) angeordnet ist, wobei die Oberfläche gegen einen endständigen Oberflächenabschnitt der Hülle (2) belastet ist und die beheizt ist und/oder mit Strom beaufschlagt ist.

10. Verfahren nach einem der voranstehenden Ansprüche, **dadurch gekennzeichnet, dass** das Lebensmittel im Anschluss an die Erwärmung bei einer Temperatur von zumindest 50 °C zu Scheiben geschnitten wird und die Scheiben mit anteiliger Überdeckung in Verpackungen abgelegt und anschließend in den Verpackungen gekühlt werden.

11. Verfahren nach Anspruch 10, **dadurch gekennzeichnet, dass** die Verpackungen mit Abstand voneinander angeordnet sind und durch Überströmen mit einem Kühlmedium gekühlt werden.

12. Vorrichtung zur Erwärmung eines Lebensmittels, das von einer Hülle (2) eingefasst ist, mit zumindest zwei beabstandeten, achsparallelen, gleichsinnig drehbaren zylindrischen Elektroden (1), die gegen die Hülle (2) anzuordnen sind und mit Anschlüssen einer elektrischen Stromquelle (4) entgegengesetzter Polarität kontaktiert sind, **dadurch gekennzeichnet, dass** zumindest eine Elektrode (1) in gegeneinander isolierte axiale Elektrodenabschnitte (10) unterteilt ist, die jeweils einzeln mit der elektrischen Stromquelle (4) kontaktiert sind und einzeln gesteuert mit der Stromquelle (4) verbindbar und mit Strom beaufschlagbar sind..

13. Vorrichtung nach Anspruch 12, **dadurch gekennzeichnet, dass** die Stromquelle (4) eingerichtet ist, die Elektroden mit Strom einer Frequenz von 2 kHz bis 300 MHz zu beaufschlagen.

14. Vorrichtung nach einem der Ansprüche 12 bis 13, **dadurch gekennzeichnet, dass** die Elektroden (1) eine elektrisch leitende umfängliche Oberfläche aufweisen und die Stromquelle (4) eingerichtet ist, die Elektroden (1) mit Wechselstrom einer Frequenz von zumindest 2 kHz zu beaufschlagen.

15. Vorrichtung nach einem der Ansprüche 12 bis 14, **dadurch gekennzeichnet, dass** sie zumindest zwei Bereiche zum Tragen der Hülle (2) aufweist, von denen jeder von zwei Elektroden (1), einer Elektrode (1) und einer Andruckrolle (9) oder zwei Andruckrollen (9) aufgespannt wird.

16. Vorrichtung nach einem der Ansprüche 12 bis 15, **dadurch gekennzeichnet, dass** die Elektroden (1) mit zumindest einer achsparallelen Andruckrolle (9) einen Zwischenraum einfassen, in den die Hülle (2) mit Kontakt zu den Elektroden (1) und der Andruckrolle (9) angeordnet werden kann.

17. Vorrichtung nach einem der Ansprüche 12 bis 16, **dadurch gekennzeichnet, dass** sie eine Anordnung von Temperaturfühlern (11) aufweist, der zur Messung der Oberflächentemperatur der Hülle (2) auf zumindest zwei axialen Abschnitte des Bereichs gerichtet ist, in dem die Hülle (2) anzuordnen ist und die Anordnung von Temperaturfühlern (11) mit einer Steuerungseinrichtung verbunden ist, die eingerichtet ist, die Stromquelle (4) abhängig vom Signal der Temperaturfühler (11) zu steuern, insbesondere nämlich abhängig von einem Signal des Temperaturfühlers (11) Elektrodenabschnitte (10) zumindest einer Elektrode (1) mit Strom zu beaufschlagen.

18. Vorrichtung nach einem der Ansprüche 15 bis 17, **gekennzeichnet durch** zumindest eine Hebeeinrichtung für jeden der Bereiche zum Tragen der Hülle (2), wobei die Hebeeinrichtung eingerichtet ist, das Lebensmittel in der Hülle (2) von einem Bereich in einen benachbarten Bereich zu bewegen.

19. Vorrichtung nach einem der Ansprüche 15 bis 18, **gekennzeichnet durch** zumindest eine Erwärmungseinrichtung (7, 8), die gegen zumindest einen endständigen Oberflächenabschnitt der Hülle (2) ausrichtbar ist, wobei die Erwärmungseinrichtung (7, 8) eine um die Längsachse der Hülle (2) drehbare Platte mit einer Oberfläche ist, die etwa senkrecht zur Längsachse (la) der Elektrode (1) angeordnet ist, wobei die Oberfläche gegen einen endständigen Oberflächenabschnitt der Hülle (2) belastbar ist und die beheizt ist und/oder mit Strom beaufschlagt ist, oder die Erwärmungseinrichtung (7, 8) ein Heißluftgebläse, ein Infrarotstrahler oder ein Dampfauslass ist.

20. Vorrichtung nach einem der Ansprüche 15 bis 19, **gekennzeichnet durch** eine Befeuchtungseinrichtung (22), die eingerichtet ist, Wasser (23) auf den Bereich aufzubringen, in dem die Hülle (2) anzuordnen ist.

21. Vorrichtung nach einem der Ansprüche 15 bis 19, **gekennzeichnet dadurch, dass** die Elektroden mit einer gemeinsamen Stromquelle verbunden sind, die eingerichtet ist, jedes Paar benachbarter Elektroden mit derselben Spannung, Stromstärke und Frequenz zu beaufschlagen.

## Claims

1. Process for the production of foods, the foods being contained within a cylindrical sheath (2), the process comprising the step of heating through application of electrical current, wherein the sheath (2) is contacted by at least two electrodes (1) to which current of opposite polarity is applied, wherein the electrodes are cylindrical, are arranged axially in parallel, and are mounted concordantly rotatably around their axes, **characterized in that** at least one electrode (1) is segmented into axial segments (14) which are insulated against one another, wherein each electrode segment is contacted with the current source by means of a line and wherein each electrode segment is individually connectable to the current source, and **in that** the sheath (2) with its longitudinal axis is arranged in parallel to the longitudinal axes of the electrodes (1), so that the at least two electrodes (1) rotate axially in parallel to the sheath (2), the sheath (2) having a rotational direction opposite to the electrodes (1).

2. Process according to claim 1, **characterized in that** a current source (4) applies alternating current of a frequency in the range of 2 kHz to 300 MHz to the electrodes (1, 1a).

3. Process according to claim 1, **characterized in that** the electrodes (1) have an electrically conductive cylindrical surface, the sheath (2) being electrically conductive and a current source (4) applies alternating current of a frequency of at least 2 kHz, preferably 3 to 50 kHz to the electrodes (1, 1a).

4. Process according to one of the preceding claims, **characterized in that** the sheath (2) is arranged consecutively in at least two areas, each of which is spanned by two electrodes (1), one electrode (1) and one pinch roller (9) or two pinch rollers (9) and which carry the sheath (2).

5. Process according to claim 4, **characterized in that** in at least two of the areas, another electric power is applied to the food inside the sheath (2).

6. Process according to one of claims 4 to 5, **characterized in that** the food inside the sheath (2) is moved from one area into an adjacent area by means of a lifting device.

7. Process according to one of the preceding claims, **characterized in that** the surface temperature of the sheath (2) is determined by means of an arrangement of temperature sensors (11), each of which is pointed towards an axial section of the sheath (2), and at least one electrode (1) is segmented into axial electrode segments (10) that are insulated against one another, each of which is individually controlled and connected to the current source (14) and supplied with power depending on a signal of the arrangement of temperature sensors (11) for the surface temperature.

8. Process according to one of the preceding claims, **characterized in that** a heating device (7, 8) is pointed to at least one terminal surface segment of the sheath (2).

9. Process according to claim 8, **characterized in that** the heating device (7, 8) is a plate having a surface which is rotatable around the longitudinal axis of the sheath (2), which is arranged approximately perpendicularly to the longitudinal axis (1a) of the electrode (1), wherein the surface is loaded against a terminal surface segment of the sheath (2), and which is heated and/or to which current is applied.

10. Process according to one of the preceding claims, **characterized in that** subsequent to the heating, the food is sliced at a temperature of at least 50 °C and the slices are deposited in a partially overlapping manner into of packagings and are subsequently cooled within the packagings.

11. Process according to claim 10, **characterized in that** the packagings are arranged with a spacing from one another and are cooled by overflowing with a cooling medium.

12. Device for heating of a food encased inside a sheath (2), having at least two spaced-apart cylindrical axially in parallel, concordantly rotatable electrodes (1) for arranging against the sheath (2), the electrodes (1) being contacted with connectors of an electrical current source (4) of opposite polarity, **characterized in that** at least one electrode (1) is segmented into axial electrode segments (10) that are insulated against one another, each of which segments (10) is individually contacted with the electric current source (4) and each of which is individually controlled connectable to the current source (4) and can be supplied with current.

13. Device according to claim 12, **characterized in that** the current source (4) is configured to supply the electrodes with current of a frequency of 2 kHz to 300 MHz.

14. Device according to one of claims 12 to 13, **characterized in that** the electrodes (1) have an electrically conductive circumferential surface and the current source (4) is configured to supply the electrodes (1) with alternating current of a frequency of at least 2 kHz.

15. Device according to one of claims 12 to 14, **characterized in** having at least two areas for carrying the sheath (2), each of which areas being spanned by two electrodes (1), one electrode (1) and one pinch roller (9) or two pinch rollers (9).

16. Device according to one of claims 12 to 15, **characterized in that** the electrodes (1) together with at least one axially parallel pinch roller (9) encompass an interstice, into which the sheath (2) can be arranged in contact with the electrodes (1) and the pinch roller (9).

17. Device according to one of claims 12 to 16, **characterized in** having an arrangement of temperature sensors (11), which in order to determine the surface temperature of the sheath (2) are pointed to at least two axial segments of the area in which the sheath (2) is to be arranged, and wherein the arrangement of temperature sensors (11) is connected to a control device configured to control the current source (4) depending on the signal of the temperature sensors (11), especially namely configured to supply electrode segments (10) of at least one electrode (1) with current depending on a signal of the temperature sensor (11).

18. Device according to one of claims 15 to 17, **characterized by** at least one lifting device for each of the areas for carrying the sheath (2), wherein the lifting device is configured to move the food inside the sheath (2) from one area into an adjacent area.

19. Device according to one of claims 15 to 18, **characterized by** at least one heating device (7, 8), the heating device (7, 8) being pointable to at least one terminal surface segment of the sheath (2), wherein the heating device (7, 8) is a plate having a surface, which plate is rotatable around the longitudinal axis of the sheath (2), which is arranged approximately in perpendicular to the longitudinal axis (1a) of the electrode (1), wherein the surface is loadable against a terminal surface segment of the sheath (2, and which is heated and/or is supplied with current, or wherein the heating device (7, 8) is a hot air gun, an infrared heater, or a steam outlet.

20. Device according to one of claims 15 to 19, **characterized by** a moistening device (22) that is configured to apply water (23) to the area in which the sheath (2) is to be arranged.

21. Device according to one of claims 15 to 19, **characterized in that** the electrodes (1) are connected to a shared current source that is configured to supply each pair of adjacent electrodes with the same voltage, amperage and frequency.

## Revendications

1. Procédé de fabrication d'aliments qui sont contenus dans une enveloppe (2) cylindrique, comportant l'étape de réchauffage par l'application d'un courant électrique, dans lequel l'enveloppe (2) est mise en contact avec au moins deux électrodes (1) auxquels un courant de polarité opposée est appliqué, les électrodes (1) étant cylindriques, disposées en parallèle par rapport à leurs axes et montées de manière à pouvoir être tournées dans le même sens autour de leurs axes, **caractérisé en ce qu'**au moins une électrode (1) est divisée en sections axiales (14) isolées entre elles, chaque section d'électrode étant mise en contact avec une source de courant électrique au moyen d'une ligne et pouvant être reliée individuellement à la source de courant et **en ce que** l'enveloppe (2) est disposée de façon à ce que son axe longitudinal soit parallèle aux axes longitudinaux des électrodes (1), de sorte que les au moins deux électrodes (1) tournent de façon à ce que leurs axes soient parallèles à l'enveloppe (2), l'enveloppe (2) tournant dans un sens de rotation opposé à celui des électrodes (1).

2. Procédé selon la revendication 1, **caractérisé en ce qu'**une source de courant (4) applique aux électrodes (1, 1a) un courant alternatif d'une fréquence dans la plage de 2 kHz à 300 Mhz.

3. Procédé selon la revendication 1, **caractérisé en ce que** les électrodes (1) présentent une surface cylindrique électriquement conductrice, l'enveloppe (2) est électriquement conductrice et une source de courant (4) applique aux électrodes (1, 1a) un courant alternatif d'une fréquence d'au moins 2 kHz, de préférence 3 à 50 kHz.

4. Procédé selon l'une des revendications précédentes, **caractérisé en ce que** l'enveloppe (2) est disposée successivement dans au moins deux zones, dont chacune est fixée par deux électrodes (1), une électrode (1) et un rouleau de pression (9) ou deux rouleaux de pression (9) et par lesquelles l'enveloppe (2) est supportée.

5. Procédé selon la revendication 4, **caractérisé en ce que**, dans au moins deux des zones, une autre puissance électrique est appliquée à l'aliment dans l'enveloppe (2).

6. Procédé selon l'une des revendications 4 à 5, **caractérisé en ce que** l'aliment dans l'enveloppe (2) est déplacé au moyen d'un dispositif de levage d'une zone à une zone voisine.

7. Procédé selon l'une des revendications précédentes, **caractérisé en ce que** la température de surface (1) de l'enveloppe est mesurée au moyen d'un agencement de capteurs de température (11), dont chacun est dirigé sur une section axiale de l'enveloppe (2) et au moins une électrode (1) est divisée en sections (10) d'électrode axiales isolées entre elles, dont chacune est individuellement reliée de manière commandée à la source de courant (4) et un courant est appliqué à la même en fonction d'un signal de l'agencement de capteurs de température (11).

8. Procédé selon l'une des revendications précédentes, **caractérisé en ce qu'**un dispositif de réchauffage (7, 8) est dirigé vers au moins une section surfacique terminale de l'enveloppe (2).

9. Procédé selon la revendication 8, **caractérisé en ce que** le dispositif de réchauffage (7, 8) est une plaque pouvant être tournée autour de l'axe longitudinal de l'enveloppe (2) avec une surface qui est disposée sensiblement perpendiculairement à l'axe longitudinal (la) de l'électrode (1), la surface étant chargée contre une section surfacique terminale de l'enveloppe (2), étant chauffée et/ou un courant étant appliqué à la même.

10. Procédé selon l'une des revendications précédentes, **caractérisé en ce que** l'aliment, à la suite du réchauffage à une température d'au moins 50 °C, est coupé en tranches et les tranches sont déposées dans des emballages avec une couverture proportionnelle et sont ensuite refroidies dans les emballages.

11. Procédé selon la revendication 10, **caractérisé en ce que** les emballages sont disposés éloignés les uns des autres et sont refroidies au moyen d'un milieu refroidissant coulant au-dessus.

12. Dispositif de réchauffage d'un aliment, qui est enclos par une enveloppe (2), comportant au moins deux électrodes (1) cylindriques, disposées en parallèle par rapport à leurs axes, pouvant être tournées dans le même sens et espacées l'une de l'autre, qui sont à disposer contre l'enveloppe (2) et qui sont en contact avec des raccordements d'une source de courant électrique (4) de polarité opposée, **caractérisé en ce qu'**au moins une électrode (1) est divisée en sections (10) d'électrode axiales isolées entre elles, qui sont respectivement individuellement en contact avec la source de courant électrique (4), qui peuvent être individuellement reliées de façon commandée à la source de courant (4) et auxquelles un courant peut être appliqué.

13. Dispositif selon la revendication 12, **caractérisé en ce que** la source de courant (4) est adaptée à appliquer un courant d'une fréquence de 2 kHz à 300 MHz aux électrodes.

14. Dispositif selon l'une des revendications 12 à 13, **caractérisé en ce que** les électrodes (1) présentent une surface circonférentielle électriquement conductrice et la source de courant (4) est adaptée à appliquer un courant alternatif d'une fréquence d'au moins 2 kHz aux électrodes (1).

15. Dispositif selon l'une des revendications 12 à 14, **caractérisé en ce qu'**il présente au moins deux zones pour supporter l'enveloppe (2), dont chacune est fixée par deux électrodes (1), une électrode (1) et un rouleau de pression (9) ou deux rouleaux de pression (9).

16. Dispositif selon l'une des revendications 12 à 15, **caractérisé en ce que** les électrodes (1) enclosent, conjointement avec au moins un rouleau de pression (9) dont l'axe est disposé en parallèle, un espace intermédiaire, dans lequel l'enveloppe (2) peut être disposée au contact des électrodes (1) et du rouleau de pression (9).

17. Dispositif selon l'une des revendications 12 à 16, **caractérisé en ce qu'**il présente un agencement de capteurs de température (11), qui est dirigé vers au moins deux sections axiales de la zone dans laquelle l'enveloppe (2) est à disposer pour mesurer la température de surface de l'enveloppe (2) et l'agencement de capteurs de températures (11) est relié à un bloc de commande adapté à commander la source de courant (4) en fonction du signal du capteur de température (11), à savoir en particulier à appliquer un courant à des sections (10) d'électrode d'au moins une électrode (1) en fonction d'un signal du capteur de température (11).

18. Dispositif selon l'une des revendications 15 bis 17, **caractérisé par** au moins un dispositif de levage pour chacune des zones pour supporter l'enveloppe (2), le dispositif de levage étant adapté à déplacer l'aliment dans l'enveloppe (2) d'une zone à une zone voisine.

19. Dispositif selon l'une des revendications 15 à 18, **caractérisé par** au moins un dispositif de réchauffage (7, 8), qui peut être orienté vers au moins une section surfacique terminale de l'enveloppe (2), le dispositif de réchauffage (7, 8) étant une plaque pouvant être tournée autour de l'axe longitudinal de l'enveloppe (2) avec une surface, qui est disposée sensiblement perpendiculairement à l'axe longitudinal (la) de l'électrode (1), la surface pouvant être chargée contre une section surfacique terminale de l'enveloppe (2), étant chauffée et/ou un courant étant appliqué à la même, ou le dispositif de réchauffage (7, 8) est un thermoventilateur, un radiateur aux rayons infrarouges ou une sortie de vapeur.

20. Dispositif selon l'une des revendications 15 à 19, **caractérisé par** un dispositif d'humidification (22) adapté à fournir de l'eau (23) à la zone dans laquelle l'enveloppe (2) est disposée.

21. Dispositif selon l'une des revendications 15 bis 19, **caractérisé en ce que** les électrodes sont reliées à une source de courant commune adaptée à appliquer à chaque couple d'électrodes voisines la même tension, le même courant et la même fréquence.
